# EUROPEAN PATENT SPECIFICATION

(11) **EP 3 112 928 B1**
(45) Date of publication and mention of the grant of the patent: **19.06.2019**
(21) Application number: 14861177.5
(22) Date of filing: 27.03.2014
(51) Int. Cl.: G02B 5/18, G02B 27/22, G02F 1/1339, G02B 27/26, G02B 27/42, G02F 1/1335, H04N 13/31, G02F 1/13

(54) **DISPLAY APPARATUS**
ANZEIGEVORRICHTUNG
APPAREIL D'AFFICHAGE

(30) Priority: 25.02.2014 CN 201410064800
(43) Date of publication of application: 04.01.2017
(73) Proprietor: BOE Technology Group Co., Ltd., Beijing 100015 (CN)
(72) Inventor: WEI, Wei, Beijing 100176 (CN); LU, Shan, Beijing 100176 (CN); WU, Yanbing, Beijing 100176 (CN); WU, Xinyin, Beijing 100176 (CN); SU, Jing, Beijing 100176 (CN)
(74) Representative: Lavoix
(86) International application number: PCT/CN2014/074149
(87) International publication number: WO 2015/127705

(56) References cited:
- WO-A1-2013/127214
- CN-A- 102 854 628
- CN-A- 102 854 628
- CN-A- 102 967 965
- CN-A- 103 268 044
- CN-U- 201 909 919
- CN-U- 203 894 504
- US-A1- 2012 287 359

## Description

### TECHNICAL FIELD

The present disclosure relates to the field of display technology, and in particular to a display apparatus.

### BACKGROUND

Two-dimensional (2D) display is usually adopted in a conventional display apparatus, which however may not straightforwardly show depth information about a scene. Along with the continuous development of the computer information technology and display technology, the two-dimensional display no longer meets the public demand, and a three-dimensional (3D) display technology has gradually become a research focus in the display field. Currently, the 3D display technology includes two types, i.e., autostereoscopic 3D display and stereoscopic 3D display. The autostereoscopic 3D display technology refers to that a viewer may experience a stereo effect by his eyes without any stereoscopic spectacles, and it further includes three common types, i.e., a barrier 3D display technology, a lenticular lens 3D display technology, and a directional backlight 3D display technology.

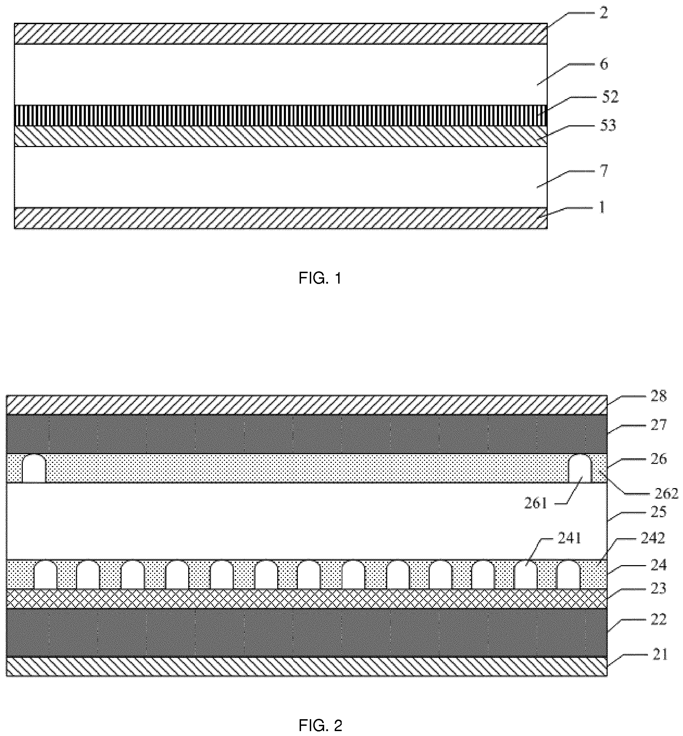

Taking the barrier 3D display technology as an example, it includes at least a liquid crystal grating display technology and a parallax barrier grating display technology. The operating principle of the barrier 3D display technology lies in that, a parallax barrier such as a liquid crystal grating is arranged at a position directly facing the display apparatus, and parallax images displayed by the pixels in odd-numbered columns and even-numbered columns are projected into the left and right eyes of the viewer, respectively, by blocking the light with the liquid crystal grating, and then the parallax images are combined at the viewer's visual cortex so as to obtain a stereo image. As shown in Fig.1, which is a sectional view of a common display apparatus with the parallax barrier grating 3D display technology, the display apparatus includes, from bottom to top, a 2D display panel 7, an adhesive layer 52 and a liquid crystal grating 6. A first polarizer 1 and a third polarizer 53 are arranged at a lower surface and an upper surface of the 2D display panel 7, respectively, and a second polarizer 2 is arranged at an upper surface of the liquid crystal grating 6. In the display apparatus, the 2D display panel 7 provided with the first polarizer 1 and the third polarizer 53 is adhered to the liquid crystal grating 6 provided with the second polarizer 2 by the adhesive layer 52, i.e., the liquid crystal grating 6 and the 2D display panel 7 are arranged opposite to each other to form a cell by the adhesive layer 52.

Because merely the adhesive is provided between the liquid crystal grating and the 2D display panel after they are arranged opposite to each other to form a cell, usually an uneven spacing occurs between the liquid crystal grating and the 2D display panel due to the factors such as an uneven adhesive pressure and autogenous shrinkage of the adhesive. As a result, the display quality will be adversely affected and the yield of the display apparatus will be reduced.

A reference document (CN 102 967 965 A) discloses a liquid crystal slit grating and a stereoscopic display device, wherein the liquid crystal slit grating can accurately control effect of spacers on light transmittance or accurately control crosstalk caused by spacers, and the stereoscopic display device can improve three dimensional effect of the stereoscopic display device during three dimensionally displaying.

A further reference document (CN 102 854 628 A) discloses a display device and a method for manufacturing the display device, which may maintain a gap between a grating and a display panel to be uniform, so as to improve display quality and yield rate of the display device.

### SUMMARY

The present disclosure has solved the afore described problem as defined in the attached claims. An object of the present disclosure is to provide a display apparatus, so as to prevent the display quality from being adversely affected due to an uneven spacing between a grating and a 2D display panel in an existing display device.

The present disclosure provides in one embodiment a display apparatus according to claim 1.

Preferred embodiments of the invention are the subject matter of the dependent claims, whose content is to be understood as forming an integral part of the present description.

### BRIEF DESCRIPTION OF THE DRAWINGS

Fig.1 is a sectional view of an existing display apparatus using a parallax barrier grating 3D display technology;
Fig.2 is a sectional view of a display apparatus according to the first embodiment of the present disclosure;
Fig.3 is a top view of a first supporting layer according to the first embodiment of the present disclosure;
Fig.4 is a sectional view of the first supporting layer according to the first embodiment of the present disclosure;
Fig. 5 is a top view of the structure after the first supporting layer is aligned with a black matrix (BM) according to the first embodiment of the present disclosure;
Fig.6 is a partially enlarged view of the structure after the first supporting layer is aligned with the black matrix in Fig.5;
Fig.7 is a view showing a pattern formed after each fringe of the black matrix in a vertical direction overlaps a first support member covering the fringe in Fig.5; and
Fig.8 is a sectional view of the display apparatus according to the second embodiment of the present disclosure.

### DETAILED DESCRIPTION

According to the following embodiments of the present disclosure, a first supporting layer is arranged between a 2D display panel and a grating of a display device, and a first support member of the first supporting layer partially covers a black matrix (BM) fringe in the 2D display panel in a direction of the BM fringe, so as to maintain an even spacing between the grating and the 2D display panel, thereby to reduce Moire fringes.

The grating mentioned herein refers to a grating in a broad sense, which includes both a grating for a barrier 3D display technology and a lens grating in a lenticular lens 3D display technology, i.e. the grating includes a parallax barrier grating, a liquid crystal grating, a lenticular lens grating, a liquid crystal lens grating, and so on. According to the display apparatus in the embodiments of the present disclosure, the autostereoscopic 3D display may be implemented by the parallax barrier grating (also referred to as a passive grating), the liquid crystal grating (also referred to as an active grating), the lenticular lens grating (also referred to as a passive lens grating), or the liquid crystal lens grating (also referred to as an active liquid crystal lens grating). In the embodiments of the present disclosure, the structures of the display apparatus may vary depending on the specific structure of the adopted grating.

The present disclosure will be described hereinafter in conjunction with the drawings and embodiments. It should be appreciated that, the following embodiments are for illustrative purposes only, but shall not be used to limit the scope of the present disclosure.

The present disclosure provides in one embodiment a display apparatus, which includes a 2D display panel, and a grating arranged above a light-exiting surface of the 2D display panel. A first supporting layer is arranged between the 2D display panel and the grating, and it includes a plurality of first support members with an identical height. The first support member partially covers a black matrix fringe in the 2D display panel in a direction of the black matrix fringe.

In the embodiments of the present disclosure, the word "identical" indicates that the heights are exactly equivalent to each other or a difference therebetween is in an allowable range. The expression "a plurality of" indicates that there exist two or more objects.

According to the display apparatus in the embodiments of the present disclosure, the first supporting layer including the first support members with an identical height is arranged between the 2D display panel and the grating, so as to maintain an even spacing between the grating and the 2D display panel. In addition, the first support member partially covers the black matrix fringe in the 2D display panel in the direction of the black matrix fringe, so it is able to reduce Moire fringes.

It should be appreciated that, the Moire fringes are caused by the interference between the BM in the 2D display panel (mainly the BM fringes in a vertical direction) and the grating. In the embodiments of the present disclosure, the first support member partially covers the black matrix fringe in the direction of the black matrix fringe in the 2D display panel, i.e. the BM fringes in the vertical direction are disordered by the plurality of first support members, and as a result, it is able to reduce the occurrence of the Moire fringes.

The following two embodiments are provided to describe the display apparatus of the present disclosure in details.

### First Embodiment

The display apparatus in this embodiment includes a first supporting layer and a second supporting layer.

As shown in Fig.2, the display apparatus includes, from bottom to top, a polarizer 21, a 2D display panel 22, a polarizer 23, a first supporting layer 24, an isolation substrate 25, a second supporting layer 26, an active grating 27, and an active grating polarizer 28.

The first supporting layer 24 includes a plurality of first support members 241 with an identical height. The first support member 241 partially covers a BM fringe (not shown) in the 2D display panel 22 in the direction of the BM fringe. The second supporting layer 26 includes at least one second support member 261 at a peripheral region of the BM and with an identical height.

In this embodiment, a region of the first supporting layer 24 other than the first support member 241 is filled with an adhesive 242. During the manufacture, a curing shrinkage rate of the first support member is different from that of the adhesive, so the heights of the first support member and the adhesive are set in accordance with the curing shrinkage rates thereof, so as to provide an identical height after the curing, thereby to improve a flatness level of the first supporting layer.

In this embodiment, a region of the second supporting layer 26 other than the second support member 261 is filled with an adhesive 262. During the manufacture, a curing shrinkage rate of the second support member is different from that of the adhesive, so the heights of the second support member and the adhesive are set in accordance with the curing shrinkage rates thereof, so as to provide an identical height after the curing, thereby to improve a flatness level of the second supporting layer.

Optionally, in this embodiment, a closed pattern is formed by the second support members 261, so as to further improve the flatness level of the second supporting layer.

Optionally, in this embodiment, the first support member and the second support member are made of an identical material. Of course, they may also be made of different materials. For example, the first support member may be made of a transparent material, while the second support member may be made of a non-transparent material.

In this embodiment, the first support member is made of a transparent and insulating material with a relatively large refractive index (e.g., greater than 1.5) and relatively large hardness (e.g., greater than the hardness of 1H pencil), such as a photosensitive polymer compound (e.g., DAM glue), silica beads, and a transparent and photocurable/heat-curable resin containing S, Br, I, P and/or groups with a high refractive index such as sulfonyl.

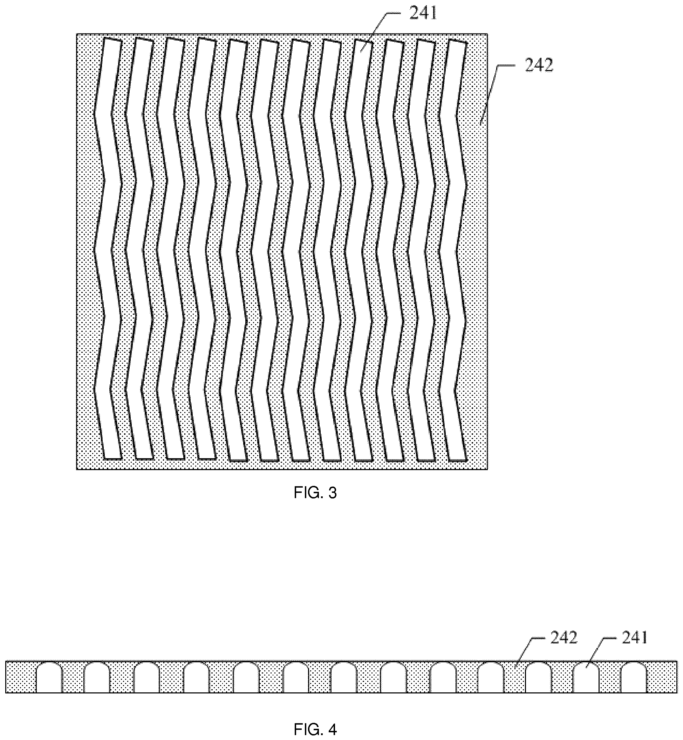

Fig.3 is a top view of the plurality of first support members 241 with an identical height included in the first supporting layer 24. The plurality of the first support members 241 is arranged parallel to each other and at a regular interval, and the first support member is of a zigzag or curved shape in the length direction of the BM fringe (Fig.3 shows the first support member with a zigzag shape). Fig.4 is a sectional view of the first supporting layer 24. By providing the first support member in a zigzag or curved form in the length direction of the BM fringe, it is able to reduce the interference between the light beams, thereby to reduce the Moire fringes.

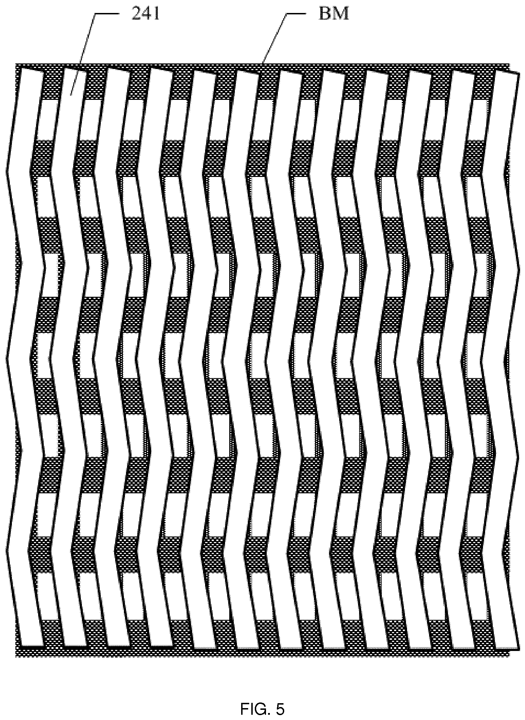

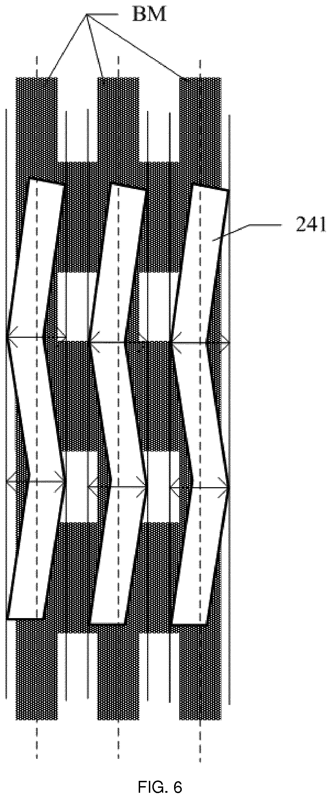

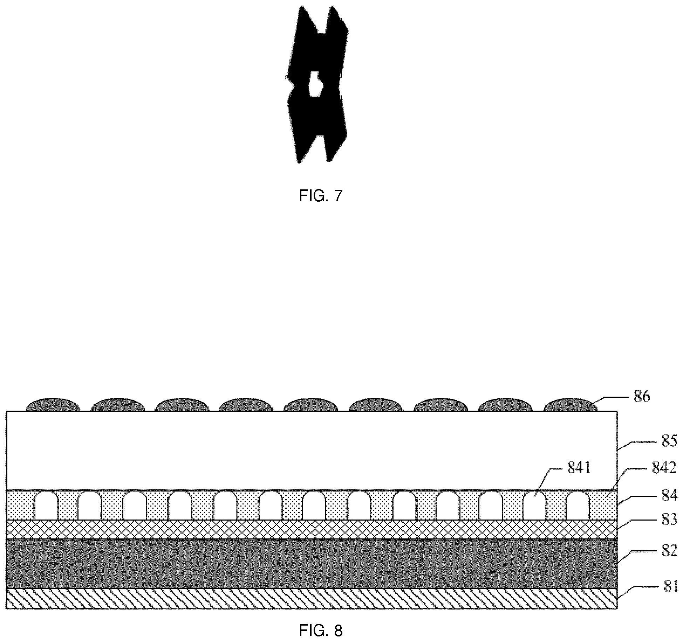

Optionally, in this embodiment, the first support member is of a width in a width direction of the BM fringe covered by the first support member larger than a width of the BM fringe, and a central line of the first support member in a length direction of the BM fringe is coincident with a central line of the BM fringe in its length direction. Fig.5 shows the structure after the first supporting layer and the BM are aligned with each other. As shown in Fig.6, the central line of the first support member 241 in the length direction of the BM fringe covered by the first support member 241 is coincident with the central line of the BM fringe in its length direction. Fig.7 shows a pattern formed after the BM fringe overlaps the first support member covering the BM fringe. As a result, it is able to change a transmission path of the light beam and reduce the interference between the light beams, thereby to reduce the Moire fringes.

In this embodiment, the first supporting layer is arranged between the 2D display panel and the isolation substrate, and adjacent to the 2D display panel. In addition, the first supporting layer is arranged on the BM of the 2D display panel. Thus, the transmission of the light beams from display sub-pixels in the 2D display panel may not be affected by the first supporting layer. Furthermore, in this embodiment, the second supporting layer is arranged between the grating and the isolation substrate, and away from the 2D display panel (generally, a thickness of the isolation substrate is 1-10 mm). When a structure of the second supporting layer is same as that of the first supporting layer, a transmission direction of the light beam entering the grating may be affected, i.e., the light beam may be refracted after passing through the second supporting layer, which thus results in an increase in the 3D crosstalk. As a result, when the second supporting layer in this embodiment of the present disclosure is adopted, the 3D crosstalk will not be increased.

### Second Embodiment

The display apparatus in this embodiment includes a first supporting layer, but without any second supporting layer.

As shown in Fig.8, the display apparatus includes, from bottom to top, a polarizer 81, a 2D display panel 82, a polarizer 83, a first supporting layer 84, an isolation substrate 85, and a lens grating 86.

The first supporting layer 84 includes a plurality of first support members 841 with an identical height. The first support member 841 partially covers a BM fringe (not shown) in the 2D display panel 82 in a direction of the BM fringe.

In this embodiment, a region of the first supporting layer 84 other than the first support member 841 is filled with an adhesive 842. During the manufacture, a curing shrinkage rate of the first support member is different from that of the adhesive, so the heights of the first support member and the adhesive are set in accordance with the curing shrinkage rates thereof, so as to provide an identical height after the curing, thereby to improve a flatness level of the first supporting layer.

Optionally, in this embodiment, the first support member is made of a transparent material.

In this embodiment, the first support member is made of a transparent and insulating material with a relatively large refractive index (e.g., greater than 1.5) and relatively large hardness, such as a photosensitive polymer compound (e.g., DAM glue) and silica beads.

In this embodiment, the first support member 841 is of a zigzag or curved shape in the length direction of the BM fringe. For the details, please refer to the first embodiment. As a result, it is able to reduce the interference between the light beams, thereby to reduce the Moire fringes.

Optionally, in this embodiment, the first support member is of a width in a width direction of the BM fringe covered by the first support member larger than a width of the BM fringe, and a central line of the first support member in a length direction of the BM fringe is coincident with a central line of the BM fringe in its length direction. For the details, please refer to the first embodiment. Because the transmission path of the light beam is changed, it is able to reduce the interference between the light beams, thereby to reduce the Moire fringes.

In this embodiment, the first supporting layer is arranged between the 2D display panel and the isolation substrate, and adjacent to the 2D display panel. In addition, the first supporting layer is arranged on the BM of the 2D display panel. Thus, the transmission of the light beams from display sub-pixels in the 2D display panel may not be affected by the first supporting layer.

In the embodiments of the present disclosure, the display apparatus may be any product or member having a display function, such as an LCD panel, an electronic paper, an OLED (organic light-emitting diode) panel, a mobile phone, a flat panel computer, a TV, a display, a laptop computer, a digital photo frame, and a navigator.

The above are merely the preferred embodiments of the present disclosure. It should be appreciated that, a person skilled in the art may make further modifications and improvements without departing from the scope of the invention which is defined by the appended claims.

## Claims

1. A three-dimensional display apparatus, comprising a two-dimensional display panel (22, 82), and a grating (27, 86) arranged above a light-exiting surface of the two-dimensional display panel (22, 82), wherein
a first supporting layer (24, 84) is arranged between the two-dimensional display panel (22, 82) and the grating (27, 86), and the first supporting layer (24, 84) comprises a plurality of first support members (241, 841) with an identical height,
the three-dimensional display apparatus being **characterized in that**:
each of the first support members (241, 841) partially covers a respective light-blocking portion of a black matrix (BM) in the two-dimensional display panel (22, 82) in a length direction of the black matrix (BM),
wherein each of the first support members (241, 841) is of a zigzag shape in the length direction of the black matrix (BM), the first support member (241, 841) is of a width in a width direction of the black matrix (BM) larger than a width of the respective light-blocking portion of the black matrix (BM), and the center of the width of each of the first support members (241, 841) is coincident with the center of the width of the respective light-blocking portion of the black matrix (BM).

2. The three-dimensional display apparatus according to claim 1, wherein an isolation substrate (25, 85) is further arranged between the two-dimensional display panel (22, 82) and the grating (27, 86), and the first supporting layer (24, 84) is arranged between the two-dimensional display panel (22, 82) and the isolation substrate (25, 85).

3. The three-dimensional display apparatus according to claim 1, wherein a polarizer (23, 83) is further arranged between the first supporting layer (24, 84) and the two-dimensional display panel (22, 82).

4. The three-dimensional display apparatus according to claim 1, wherein the first support member (241, 841) is made of a transparent material.

5. The three-dimensional display apparatus according to claim 1, wherein a region of the first supporting layer (24, 84) other than the first support member (241, 841) is filled with an adhesive (242, 842).

6. The three-dimensional display apparatus according to claim 2, wherein the first supporting layer (24, 84) is arranged between the two-dimensional display panel (22, 82) and the isolation substrate (25, 85), and a second supporting layer (26) is arranged between the grating (27) and the isolation substrate (25) and includes at least one second support member (261) arranged at a peripheral region of the black matrix and having an identical height.

7. The three-dimensional display apparatus according to claim 6, wherein a closed pattern is formed by the second support members (261).

8. The three-dimensional apparatus according to claim 6, wherein a region of the second supporting layer (261) other than the second support member is filled with an adhesive (262).

## Patentansprüche

1. Dreidimensionale Anzeigevorrichtung, umfassend ein zweidimensionales Anzeigefeld (22, 82) und ein Gitter (27, 86), das über einer Lichtausgangsfläche des zweidimensionalen Anzeigefelds (22, 82) angeordnet ist, wobei
eine erste tragende Schicht (24, 84) zwischen dem zweidimensionalen Anzeigefeld (22, 82) und dem Gitter (27, 86) angeordnet ist und die erste tragende Schicht (24, 84) eine Mehrzahl erster Stützteile (241, 841) identischer Höhe umfasst,
wobei die dreidimensionale Anzeigevorrichtung **dadurch gekennzeichnet ist, dass**, jedes der ersten Stützteile (241, 841) einen jeweiligen lichtundurchlässigen Abschnitt einer Black Matrix (BM) im zweidimensionalen Anzeigefeld (22, 82) in einer Längsrichtung der Black Matrix (BM) teilweise abdeckt,
wobei jedes der ersten Stützteile (241, 841) in Längsrichtung der Black Matrix (BM) eine Zickzack-Form aufweist, das erste Stützteil (241, 841) in Breiterichtung der Black Matrix (BM) eine Breite aufweist, die größer ist als eine Breite des jeweiligen lichtundurchlässigen Abschnitts der Black Matrix (BM), und der Mittelpunkt der Breite jedes der ersten Stützteile (241, 841) mit dem Mittelpunkt der Breite des jeweiligen lichtundurchlässigen Abschnitts der Black Matrix (BM) übereinstimmt.

2. Dreidimensionale Anzeigevorrichtung nach Anspruch 1, wobei ein Isolationssubstrat (25, 85) ferner zwischen dem zweidimensionalen Anzeigefeld (22, 82) und dem Gitter (27, 86) angeordnet ist, und die erste tragende Schicht (24, 84) zwischen dem zweidimensionalen Anzeigefeld (22, 82) und dem Isolationssubstrat (25, 85) angeordnet ist.

3. Dreidimensionale Anzeigevorrichtung nach Anspruch 1, wobei ein Polarisator (23, 83) ferner zwischen der ersten tragenden Schicht (24, 84) und dem zweidimensionalen Anzeigefeld (22, 82) angeordnet ist.

4. Dreidimensionale Anzeigevorrichtung nach Anspruch 1, wobei das erste Stützteil (241, 241) aus einem transparenten Material besteht.

5. Dreidimensionale Anzeigevorrichtung nach Anspruch 1, wobei ein anderer Bereich der ersten tragenden Schicht (24, 84) als das erste Stützteil (241, 841) mit einem Klebstoff (242, 842) gefüllt ist.

6. Dreidimensionale Anzeigevorrichtung nach Anspruch 2, wobei die erste tragende Schicht (24, 84) zwischen dem zweidimensionalen Anzeigefeld (22, 82) und dem Isolationssubstrat (25, 85) angeordnet ist und eine zweite tragende Schicht (26) zwischen Gitter (27) und Isolationssubstrat (25) angeordnet ist und mindestens ein zweites Stützteil (261) umfasst, das in einem peripheren Bereich der Black Matrix angeordnet ist und eine identische Höhe aufweist.

7. Dreidimensionale Anzeigevorrichtung nach Anspruch 6, wobei ein geschlossenes Muster durch die zweiten Stützteile (261) gebildet wird.

8. Dreidimensionale Anzeigevorrichtung nach Anspruch 6, wobei ein anderer Bereich der ersten zweiten Schicht (261) als das zweite Stützteil mit einem Klebstoff (262) gefüllt ist.

## Revendications

1. Appareil d'affichage tridimensionnel, comprenant un panneau d'affichage bidimensionnel (22, 82) et un réseau (27, 86) agencé au-dessus d'une surface de sortie de lumière du panneau d'affichage bidimensionnel (22, 82), dans lequel
une première couche de support (24, 84) est agencée entre le panneau d'affichage bidimensionnel (22, 82) et le réseau (27, 86) et la première couche de support (24, 84) comprend une pluralité de premiers éléments de support (241, 841) de hauteur identique,
l'appareil d'affichage tridimensionnel étant **caractérisé en ce que** :
chacun des premiers éléments de support (241, 841) couvre partiellement une partie respective de blocage de lumière d'une matrice noire (BM) dans le panneau d'affichage bidimensionnel (22, 82) dans une direction de longueur de la matrice noire (BM),
dans lequel chacun des premiers éléments de support (241, 841) est une forme en zigzag dans la direction de longueur de la matrice noire (BM), le premier élément de support (241, 841) a une largeur dans la direction de largeur de la matrice noire (BM) supérieure à une largeur de la partie respective de blocage de lumière de la matrice noire (BM), et le centre de la largeur de chacun des premiers éléments de support (241, 841) coïncide avec le centre de la largeur de la partie respective de blocage de lumière de la matrice noire (BM).

2. Appareil d'affichage tridimensionnel selon la revendication 1, dans lequel un substrat d'isolation (25, 85) est agencé en outre entre le panneau d'affichage bidimensionnel (22, 82) et le réseau (27, 86) et la première couche de support (24, 84) est agencée entre le panneau d'affichage bidimensionnel (22, 82) et le substrat d'isolation (25, 85).

3. Appareil d'affichage tridimensionnel selon la revendication 1, dans lequel un polariseur (23, 83) est agencé en outre entre la première couche de support (24, 84) et le panneau d'affichage bidimensionnel (22, 82).

4. Appareil d'affichage tridimensionnel selon la revendication 1, dans lequel le premier élément de support (241, 841) est fait d'un matériau transparent.

5. Appareil d'affichage tridimensionnel selon la revendication 1, dans lequel une région de la première couche de support (24, 84) autre que le premier élément de support (241, 841) est remplie d'un adhésif (242, 842).

6. Appareil d'affichage tridimensionnel selon la revendication 2, dans lequel la première couche de support (24, 84) est agencée entre le panneau d'affichage bidimensionnel (22, 82) et le substrat d'isolation (25, 85) et une seconde couche de support (26) est agencée entre le réseau (27) et le substrat d'isolation (25) et comprend au moins un second élément de support (261) agencé dans une région périphérique de la matrice noire et doté d'une hauteur identique.

7. Appareil d'affichage tridimensionnel selon la revendication 6, dans lequel un motif fermé est formé par les seconds éléments de support (261).

8. Appareil d'affichage tridimensionnel selon la revendication 6, dans lequel une région de la seconde couche de support (261) autre que le second élément de support est remplie d'un adhésif (262).
